# EUROPEAN PATENT SPECIFICATION

(11) **EP 3 607 734 B1**
(45) Date of publication and mention of the grant of the patent: **26.01.2022**
(21) Application number: 18810526.6
(22) Date of filing: 29.05.2018
(51) Int. Cl.: H04M 1/02, H01Q 1/24, H01Q 1/22, H01Q 5/335, H01Q 13/10, H01Q 21/28

(54) **ELECTRONIC DEVICE COMPRISING AN ANTENNA**
ELEKTRONISCHE VORRICHTUNG MIT EINER ANTENNE
DISPOSITIF ÉLECTRONIQUE COMPRENANT UNE ANTENNE

(30) Priority: 29.05.2017 KR 20170066463
(43) Date of publication of application: 12.02.2020
(73) Proprietor: Samsung Electronics Co., Ltd., Suwon-si, Gyeonggi-do 16677 (KR)
(72) Inventor: LEE, Han Bin, Suwon-si Gyeonggi-do 16676 (KR); KIM, Jae Hyung, Yongin-si Gyeonggi-do 16989 (KR); LI, Hua, Gunpo-si Gyeonggi-do 15802 (KR); MOON, Je Sun, Suwon-si Gyeonggi-do 16708 (KR); BANG, Jin Kyu, Suwon-si Gyeonggi-do 16687 (KR); YU, Chang Ha, Anyang-si Gyeonggi-do 14074 (KR); HONG, Sung Yeul, Suwon-si Gyeonggi-do 16490 (KR)
(74) Representative: HGF
(86) International application number: PCT/KR2018/006075
(87) International publication number: WO 2018/221928

(56) References cited:
- EP-A1- 3 041 083
- WO-A1-2004/102744
- WO-A1-2016/155591
- JP-A- 2003 318 622
- US-A1- 2014 125 528
- US-A1- 2014 125 528
- US-A1- 2016 336 643
- US-A1- 2016 344 090
- US-A1- 2017 117 616

## Description

### Technical Field

The present disclosure relates, generally, to an electronic device, and more particularly, to an electronic device including an antenna that uses a metal housing of the electronic device.

### Background Art

An antenna provided in the electronic device, e.g., a smartphone, a tablet, or the like, may be formed of a conductive material, and may be used to communicate with a network.

US2016/0336643 A1 discloses an electronic device with hybrid antennas that include slot antenna resonating elements formed from slots in a ground plane and planar inverted-F antenna resonating elements. The planar inverted-F antenna resonating elements may each have a planar metal member that overlaps one of the slots. The slot of each slot antenna resonating element may divide the ground plane into first and second portions. A return path and feed may be coupled in parallel between the planar metal member and the first portion of the ground plane. Tunable components such as tunable inductors may be used to tune the hybrid antennas. A tunable inductor may bridge the slot in hybrid antenna, may be coupled between the planar metal member of the planar inverted-F antenna resonating element and the ground plane, or multiple tunable inductors may bridge the slot on opposing sides of the planar inverted-F antenna resonating element.

Further electronic devices using slot antennas are disclosed by WO 2004/102744 A1, EP 3 041 083 A1, and US 2014/125528 A1.

### Disclosure of Invention

### Technical Problem

While a housing, which is typically made of metal, has been used to improve the rigidity and design of the electronic device, the antenna performance in the electronic device may be deteriorated due to a scattering effect by the metal, confinement effect of an electromagnetic field, mismatch, or the like.

### Solution to Problem

In accordance with an aspect of the disclosure, there is provided an electronic device as defined in claim 1 of the appended claims.

Further embodiments are defined in appended claims 2 to 12.

### Advantageous Effects of Invention

Embodiments of the disclosure provide an electronic device that uses a slot, which is formed in a housing, as a radiation area of an antenna disposed inside the housing.

In embodiments of the disclosure, an electronic device may include a plurality of antennas that are mounted in a slot formed in a metal housing.

In embodiments of the disclosure, the slot can be formed on a rear surface of the metal housing and may be an element or part of the antenna, or may be a radiation area for another antenna inside of the electronic device.

### Brief Description of Drawings

The above and other aspects, features and advantages of certain embodiments of the disclosure will be more apparent from the following detailed description taken in conjunction with the accompanying drawings, in which:
FIG. 1a is a diagram of a portion of an electronic device, according to an embodiment;
FIG. 1b is a diagram of a second plate of an electronic device, according to an embodiment;
FIG. 1c is an exploded, perspective view of an electronic device, according to an embodiment;
FIG. 2 is a diagram of a wireless communication circuit of an electronic device, according to an embodiment;
FIG. 3a is a diagram of a portion of an electronic device, according to embodiment;
FIG. 3b is a diagram of a second plate, according to embodiment;
FIG. 4 is a diagram of a wireless communication circuit, according to embodiment;
FIG. 5 is a diagram of an electronic device including one or two feeding parts, according to an embodiment;
FIGs. 6a and 6b are graphs comparing efficiencies of antennas of an electronic device including one or two feeding parts, according to an embodiment;
FIG. 7 is a diagram of a distribution of current when an electronic device performs wireless-fidelity (Wi-Fi) communication of 5 GHz band, according to an embodiment; and
FIG. 8 is a diagram of an electronic device in a network environment, according to an embodiment.

### Mode for the Invention

Embodiments of the disclosure will be described herein below with reference to the accompanying drawings. However, the embodiments of the disclosure are not limited to the specific embodiments and the scope of the disclosure is defined only by the appended claims. In the description of the drawings, similar reference numerals are used for similar elements.

The terms "have," "may have," "include," and "may include" as used herein indicate the presence of corresponding features (for example, elements such as numerical values, functions, operations, or parts), and do not preclude the presence of additional features.

The terms "A or B," "at least one of A or/and B," or "one or more of A or/and B" as used herein include all possible combinations of items enumerated with them. For example, "A or B," "at least one of A and B," or "at least one of A or B" means (1) including at least one A, (2) including at least one B, or (3) including both at least one A and at least one B.

The terms such as "first" and "second" as used herein may use corresponding components regardless of importance or an order and are used to distinguish a component from another without limiting the components. These terms may be used for the purpose of distinguishing one element from another element. For example, a first user device and a second user device may indicate different user devices regardless of the order or importance. For example, a first element may be referred to as a second element without departing from the scope the disclosure, and similarly, a second element may be referred to as a first element.

It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. To the contrary, it will be understood that, when an element (for example, a first element) is "directly coupled with/to" or "directly connected to" another element (for example, a second element), there is no intervening element (for example, a third element) between the element and another element.

The expression "configured to (or set to)" as used herein may be used interchangeably with "suitable for," "having the capacity to," "designed to," " adapted to," "made to," or "capable of" according to a context. The term "configured to (set to)" does not necessarily mean "specifically designed to" in a hardware level. Instead, the expression "apparatus configured to 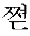 " may mean that the apparatus is "capable of 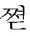 " along with other devices or parts in a certain context. For example, "a processor configured to (set to) perform A, B, and C" may mean a dedicated processor (e.g., an embedded processor) for performing a corresponding operation, or a generic-purpose processor (e.g., a central processing unit (CPU) or an application processor (AP)) capable of performing a corresponding operation by executing one or more software programs stored in a memory device.

The terms used in describing the various embodiments of the disclosure are for the purpose of describing particular embodiments and are not intended to limit the disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the disclosure.

An electronic device according to the disclosure may include at least one of, for example, a smart phone, a tablet personal computer (PC), a mobile phone, a video phone, an electronic book reader (e-book reader), a desktop PC, a laptop PC, a netbook computer, a workstation, a server, a personal digital assistant (PDA), a portable multimedia player (PMP), a MPEG-1 audio layer-3 (MP3) player, a mobile medical device, a camera, and a wearable device. The wearable device may include at least one of an accessory type (e.g., a watch, a ring, a bracelet, an anklet, a necklace, a glasses, a contact lens, or a head-mounted device (HMD)), a fabric or clothing integrated type (e.g., an electronic clothing), a body-mounted type (e.g., a skin pad, or tattoo), and a bio-implantable type (e.g., an implantable circuit).

The electronic device may be a home appliance. The home appliance may include at least one of, for example, a television, a digital video disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync^{™}, Apple TV^{™}, or Google TV^{™}), a game console (e.g., Xbox^{™} and PlayStation^{™}), an electronic dictionary, an electronic key, a camcorder, and an electronic photo frame.

The electronic device may include at least one of various medical devices (e.g., various portable medical measuring devices (a blood glucose monitoring device, a heart rate monitoring device, a blood pressure measuring device, a body temperature measuring device, etc.), a magnetic resonance angiography (MRA), a magnetic resonance imaging (MRI), a computed tomography (CT) machine, and an ultrasonic machine), a navigation device, a global positioning system (GPS) receiver, an event data recorder (EDR), a flight data recorder (FDR), a vehicle infotainment device, an electronic device for a ship (e.g., a navigation device for a ship, and a gyro-compass), avionics, security devices, an automotive head unit, a robot for home or industry, an automatic teller machine (ATM) in banks, point of sales (POS) devices in a shop, or an Internet of things device (IoT) (e.g., a light bulb, various sensors, electric or gas meter, a sprinkler device, a fire alarm, a thermostat, a streetlamp, a toaster, a sporting goods, a hot water tank, a heater, a boiler, etc.).

The electronic device may include at least one of a part of furniture or a building/ structure, an electronic board, an electronic signature receiving device, a projector, and various kinds of measuring instruments (e.g., a water meter, an electric meter, a gas meter, and a radio wave meter). The electronic device may be a combination of one or more of the aforementioned various devices. The electronic device may also be a flexible device. Further, the electronic device is not limited to the aforementioned devices, and may include an electronic device according to the development of new technology.

Hereinafter, an electronic device will be described with reference to the accompanying drawings. In the disclosure, the term "user" may indicate a person using an electronic device or a device (e.g., an artificial intelligence electronic device) using an electronic device.

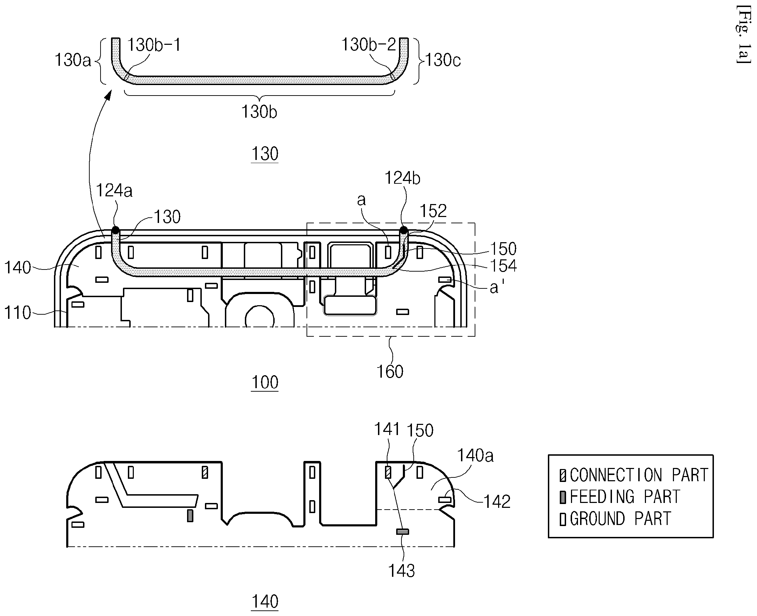

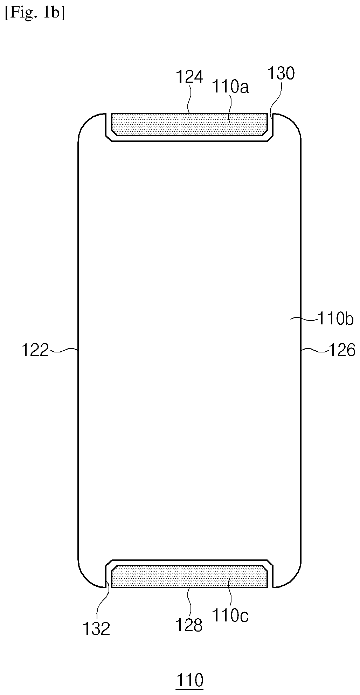

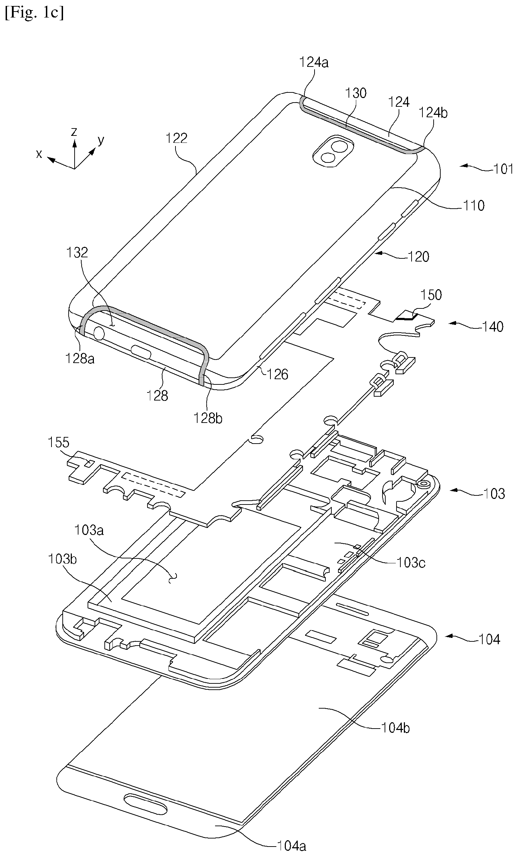

FIG. 1a is a diagram of an electronic device, according to an embodiment. FIG. 1b is a diagram of a second plate, according to an embodiment. FIG. 1c is an exploded, perspective view of an electronic device, according to an embodiment.

Referring to FIGs. 1a to 1c, an electronic device 100 according to an embodiment includes a housing that includes a first plate, a second plate 110 facing the first plate, a side member 120 (FIG. 1c) surrounding a space between the first plate and the second plate 110.

The second plate 110 includes a non-conductive slot 130 (FIG. 1b and 1c) filled with a non-conductive material. An area other than the non-conductive slot 130 of the second plate 110 is formed of a conductive material. A first conductive layer 110a of the second plate 110 and a second conductive layer 110b of the second plate 110 may be electrically separated by the non-conductive slot 130.

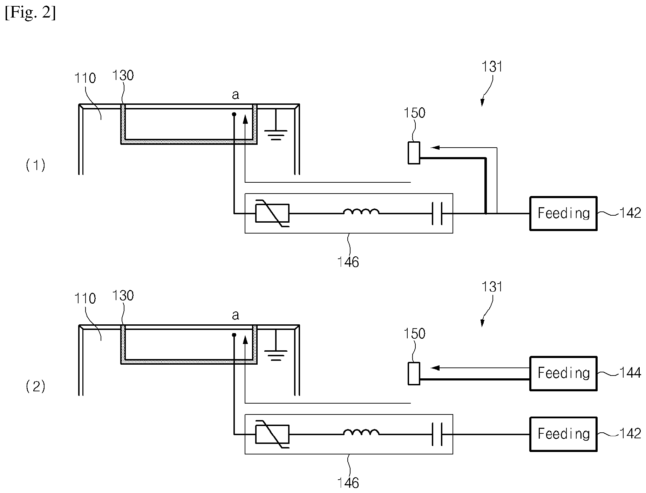

The electronic device 100 includes a circuit board 140 which is provided inside a housing and in which a wireless communication circuit 131 (as will be described below with reference to FIG. 2) is disposed. Referring to FIG. 1a, the circuit board 140 disposed inside the second plate 110 is separately illustrated under the second plate 110. The circuit board 140 may be disposed inside the second plate 110.

The circuit board 140 of the electronic device 100 includes a conductive pattern 150 formed along the non-conductive slot 130 of the second plate 110 and formed on the circuit board 140. For example, the conductive pattern 150 may be positioned in the area of the circuit board 140 facing the non-conductive slot 130. The conductive pattern 150 may be formed to be the same or similar to a portion of the non-conductive slot 130.

The wireless communication circuit 131 of the electronic device 100 feeds a point 'a' of the second plate 110 adjacent to the non-conductive slot 130. The wireless communication circuit 131 receives a signal of the first frequency band via an electrical path formed by the non-conductive slot 130.

For example, when the 'a' point is fed, one portion of the first conductive layer 110a, one portion of the second conductive layer 110b, and one portion of the non-conductive slot 130 may operate as a first antenna 160.

The wireless communication circuit 131 of the electronic device 100 is configured to feed the conductive pattern 150, and receives a signal in the second frequency band through the non-conductive slot 130.

For example, the conductive pattern 150 may operate as a second antenna different from the first antenna 160, which has the first conductive layer 110a as an antenna radiator.

Since the second plate 110 is formed of a conductive material, a radiation space for the conductive pattern 150 positioned inside the electronic device 100 is required. The conductive pattern 150 may be disposed to face the non-conductive slot 130. Thus, the conductive pattern 150 may receive an external signal through at least a portion of the non-conductive material filled in the non-conductive slot 130 and may transmit the signal to the outside.

The circuit board 140 may include a connection part connected to the second plate 110 and a feeding part, and the circuit board 140 may include a ground part that connects a ground layer of the circuit board 140 to the second plate 110.

The circuit board 140 may include a non-conductive area 140a (e.g., a fill-cut area), and may include the conductive pattern 150 formed in the non-conductive area 140a.

The circuit board 140 may include a feeding part 143 (FIG. 1a) for feeding the 'a' point and the conductive pattern 150. The feeding part 143 may be electrically connected to a processor of the circuit board 140. The circuit board 140 may include two feeding parts 143 for feeding the 'a' point and the conductive pattern 150, respectively.

The circuit board 140 may include a connection member 141 for directly/indirectly feeding the 'a' point being the feeding point of the second plate 110. The connection member 141 may include a C-clip, a screw, and a conductive member, or other suitable device. The circuit board 140 may further include a feeding line connected from the feeding part 143 to the connection member 141.

The circuit board 140 may include a ground layer connected to a ground point (e.g., the a' point) of the second plate 110.

The non-conductive slot 130 may have various shapes, and the conductive pattern 150 can be positioned inside the housing and may have a shape corresponding to the non-conductive slot 130. For example, the non-conductive slot 130 may have a U-shape, or other suitable shape. The conductive pattern 150 may be formed in a pattern similar to the partial area of the non-conductive slot 130.

The non-conductive slot 130 may be formed in the area of the second plate 110 corresponding to the location of the conductive pattern in the housing. For example, the non-conductive slot 130 may have a U-shape that contacts the edge of the second plate 110. The non-conductive slot 130 may be used as the radiation area of the second antenna therein.

The side member 120 of the electronic device 100 may include at least a portion of the non-conductive slot 130. For example, the non-conductive slot 130 may be formed in the partial area of the side member 120 and the second plate 110.

The remaining area of the side member 120, other than one portion of the non-conductive slot 130 formed in the side member 120, may be formed of a conductive material. The electronic device 100 may include a five-sided metal housing in which the second plate 110 and the side member 120 are integrally formed. Alternatively, the electronic device 100 may include a five-sided metal housing with the side member 120 attached or coupled to the second plate 110.

The side member 120 of the electronic device 100 may include a first side 122, a second side 124, a third side 126, and a fourth side 128. The first side 122 may extend in a first direction and may have a first length. The second side 124 may extend in a second direction perpendicular to the first direction and may have a second length shorter than the first length. The third side 126 may extend in parallel to the first side 122 and may have the first length. The fourth side 128 may extend in parallel to the second side 124 and may have the second length. The side member 120 may be formed in a rectangular shape.

The non-conductive slot 130 may extend from a first point 124a of the second side 124 to a second point 124b of the second side 124 along the second plate 110. The second plate 110 may include different conductive areas separated by the non-conductive slot 130. The non-conductive slot 130 may be formed in a U-shape from the first point 124a of the second side 124 to the second point 124b along the second plate 110.

The circuit board 140 of the electronic device 100 may be disposed inside the housing such that the conductive pattern 150 extends from a first point 152 of the non-conductive slot 130 to a second point 154 of the non-conductive slot 130 along the non-conductive slot 130, while facing the non-conductive slot 130.

The conductive pattern 150 may be a pattern of a metal material formed on the circuit board 140 to transmit and receive signals of a specific frequency band. The conductive pattern 150 may have different patterns depending on the target frequency, and the pattern of the conductive pattern 150 may be formed to correspond to the shape of all or part of the area of the non-conductive slot 130.

The second plate 110 of the electronic device 100 may further include the non-conductive slot 130 and another slot 132. The second conductive layer 110b of the second plate 110 and the third conductive layer 110c of the second plate 100 may be electrically separated by the other slot 132. One portion of the second conductive layer 110b, one portion of the third conductive layer 110c, and one portion of the other slot 132 may operate as a third antenna.

The circuit board 140 of the electronic device 100 may include another conductive pattern formed thereon along the other slot 132. The other conductive pattern may operate as an antenna, which uses the third conductive layer 110c as an antenna radiator and which is different from the third antenna.

The side member 120 of the electronic device 100 may be attached to the second plate 110 or may be integrally formed with the second plate 110.

The second plate 110 of the electronic device 100 may include the conductive layer 110b and the non-conductive slot 130 formed by passing through the conductive layer 110b. The non-conductive slot 130 may be referred to as a "non-conductive strip". The non-conductive slot 130 may extend from the first portion 124a of the second side 124 of the side member 120 to the second portion 124b of the second side surface 124 of the side member 120 such that the non-conductive slot 130 and the side member120 together may form a closed loop when viewed from above the second plate 110.

The electronic device 100 may include a touchscreen display exposed through a portion of the first plate.

The conductive pattern 150 may be positioned between the first plate and the second plate 110.

The conductive pattern 150 may include an elongated portion that overlaps at least partly with the non-conductive slot 130 when viewed from above the second plate 110. While FIG. 1a illustrates all portions of the conductive pattern 150 being overlapped with the non-conductive slot 130, the disclosure is not so limited. For example, only a single one portion of the conductive pattern 150 may overlap with the non-conductive slot 130.

The wireless communication circuit 131 on the circuit board 140 may be disposed in the space between the first plate and the second plate 110 and electrically connected to the conductive pattern 150. The wireless communication circuit 131 may be configured to support Wi-Fi communication in a frequency that ranges from about 2.4 GHz to 5 GHz, or greater than 5GHz and less than 2.4 GHz.

The wireless communication circuit 131 may be configured to provide a signal having a 5 GHz frequency to one portion of the conductive pattern 150, and the conductive pattern 150 may operate as an antenna radiator for an antenna that transmits and receives 5 GHz frequency.

The non-conductive slot 130 may include a first portion 130a extending in a first direction, a second portion 130b extending in a second direction substantially perpendicular to the first direction, and a third portion 130c extending in the first direction. A first end 130b-1 of the second portion 130b may be connected to the first portion 130a, and a second end 130b-2 of the second portion 130b may be connected to the third portion 130c. The first direction may be a direction oriented parallel to the first side 122 of the side member 120. The second direction may be a direction oriented parallel to the second side 124 of the side member 120.

The non-conductive slot 130 may form a U-shape when viewed from above the second plate 110. At least a portion with which the non-conductive slot 130 of the conductive pattern 150 overlaps may overlap with the first or third portion of the non-conductive slot 130.

The partial area of the second portion of the non-conductive slot 130 may include a conductive material extending from the second plate 110. The non-conductive slot 130 may include a first area and a second area that are separated by the partial area. For example, the first area and the second area may operate as radiators for different antennas.

Referring to FIG. 1c, the electronic device 100 may include a housing 101 generally formed of a metal material and a display 104, which is coupled to the circuit board 140, a support member 103, and the housing 101, which are disposed in the inner space of the housing 101 and which is implemented with a part of the appearance of the electronic device 100. Although not illustrated, the electronic device 100 may include a battery for an internal power supply and a wireless charging member for charging the battery that are disposed therein.

The housing 101 may include a first plate, the second plate 110 disposed at a location opposite to the first plate, and the side member 120 disposed in the manner to surround a space between the first plate and the second plate 110. The first plate, the second plate 110, and the side member 120 may be integrally formed.

The side member 120 may include the first side 122, the second side 124, the third side 126, and the fourth side 128. The second plate 110 may include the first non-conductive slot 130 disposed around the second side 124 and a second non-conductive slot 132 disposed around the fourth side 128. Both ends of the first non-conductive slot 130 may extend to the first point 124a and the second point 124b disposed on the second side 124. Both ends of the second non-conductive slot 132 may extend to a third point 128a and a fourth point 128b disposed on the fourth side 128. The vertical distances from each of the non-conductive slots 130 and 132 to the side surfaces 124 and 128 may be formed to be the same as or different from each other. The non-conductive slots 130 and 132 may include a non-conductive material (e.g., synthetic resin, resin, rubber, urethane, or the like) disposed on the second plate 110 that is made of metal by a double injection process or an insert molding process.

The circuit board 140 may be a printed circuit board (PCB) disposed within a space formed by the first plate, the second plate 110, and the side member 120. The circuit board 140 may include the at least one conductive pattern 150 or 155. The conductive pattern 150 or 155 may be included in the fill-cut area where the conductive ground area of the circuit board 140 is omitted. The conductive pattern 150 or 155 may be formed in a shape in which a substrate made of a dielectric material is omitted. When the conductive pattern 150 or 155 is assembled on or coupled to the housing 101, at least partial areas of the non-conductive slots 130 and 132 and the conductive patterns 150 and 155 disposed in the housing 101 may be disposed to overlap with each other in the vertical direction (e.g., Z-axis direction).

The display 104 may be exposed in at least a partial area of the first plate of the housing 101. The display 104 may include a window 104a and a display module 104b attached to the rear surface of the window 104a. The display 104 may operate as a touchscreen device including a touch sensor. The display 104 may operate as a resistive touchscreen device including a touch sensor and a pressure sensor, or other type of touchscreen device, e.g., capacitive, inductive, etc.

The support member 103 (e.g., an intermediate plate) may be interposed between the housing 101 and the display 104, and may support the circuit board 140 and a battery and reinforce the rigidity of the electronic device 100. The support member 103 may include a battery mounting part 103b and a substrate mounting part 103c disposed in a partial area at a periphery of the battery mounting part 103b. The circuit board 140 and the battery may be disposed side by side, i.e., in parallel with each other, without overlapping with the support member 103, and the at least partial area of the battery may be disposed in a manner in which the at least partial area of the battery overlaps with the support member 103 in a vertical direction (e.g., in the Z-axis direction). The intermediate plate 103 may include an opening 103a having a specific size formed in the battery mounting portion 103b so as to correspond to a swelling phenomenon of the battery.

FIG. 2 is a diagram of a wireless communication circuit 131, according to an embodiment.

As noted above, the wireless communication circuit 131 is a component of the electronic device 100 and is configured to transmit and receive a signal of the first frequency band via an electrical path formed by the non-conductive slot 130. The wireless communication circuit 131 may be configured to transmit and receive a signal of a second frequency band different from the first frequency band, through the conductive pattern 150. The signal of the second frequency band may be received or may be transmitted through the non-conductive slot 130.

Referring to (1) of FIG. 2, the wireless communication circuit 131 may include the point 'a' of the second plate 110 adjacent to the non-conductive slot 130 and may include a feeding part 142 configured to feed the conductive pattern 150. The point 'a' of the second plate 110 may be experimentally determined through the non-conductive slot 130 for the purpose of transmitting and/or receiving a target frequency. The electronic device 100 may feed the point 'a' of the second plate 110 and the conductive pattern 150 by using one feeding part 142.

Referring to (1) of FIG. 2, the electronic device 100 may include the feeding part 142 electrically connected to the wireless communication circuit 131, the point 'a' of a conductive layer 110b of the second plate 110 adjacent to the non-conductive slot 130, and the conductive pattern 150. The wireless communication circuit 131 may be configured to feed the point 'a' of the conductive layer 110a and the conductive pattern 150 through the feeding part 142.

The wireless communication circuit 131 may further include a diplexer that divides signals received from the non-conductive slot 130 and the conductive pattern 150 into the signal (e.g., Wi-Fi signal of 2.4 GHz frequency) of the first frequency band and the signal (e.g., Wi-Fi signal of 5 GHz frequency) of the second frequency band.

Referring to (2) of FIG. 2, the wireless communication circuit 131 may include the first feeding part 142 configured to feed the point 'a' of a second plate adjacent to the non-conductive slot 130 and may include a second feeding part 144 configured to feed the conductive pattern 150. The loss of a signal by the diplexer may be reduced by dividing feeding parts into two separate components for respectively feeding the point 'a' of the second plate 110 and the conductive pattern 150.

Referring to (2) of FIG. 2, the electronic device 100 may further include the first feeding part 142 electrically connected to the wireless communication circuit 131, and the point 'a' of a conductive layer 110b of the second plate 110, and the electronic device 100 may further include a second feeding part 144 electrically connected to the wireless communication circuit 131 and the conductive pattern 150. The wireless communication circuit 131 may be configured to feed the point 'a' of the conductive layer 110b through the first feeding part 142 and may be configured to feed the conductive pattern 150 through the second feeding part 144.

Referring to (1) and (2) of FIG. 2, the electronic device 100 may include a matching circuit 146 positioned on an electrical path connecting the point 'a' of the second plate 110 to the wireless communication circuit 131. The wireless communication circuit 131 may be configured to support communication (e.g., GPS communication of 1.5 GHz frequency) of a third frequency band different from the first frequency band (e.g., Wi-Fi signal of 2.4 GHz frequency), by using the non-conductive slot 130. The wireless communication circuit 131 may transmit or receive two signals having different frequency bands through the non-conductive slot 130.

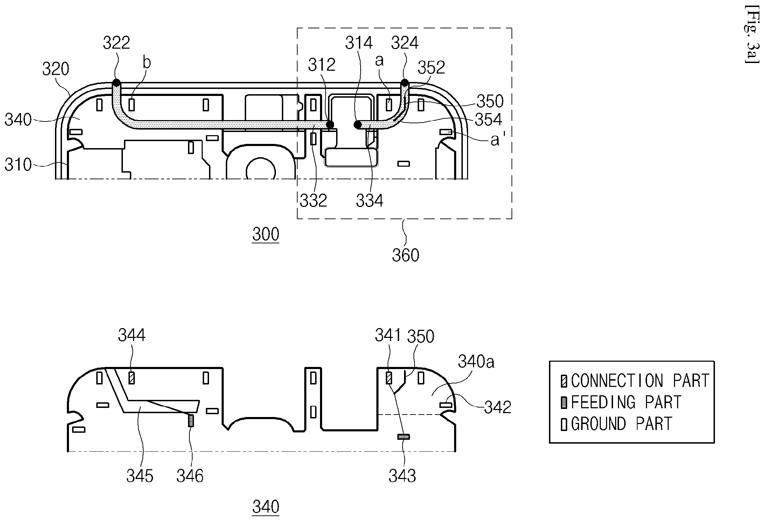

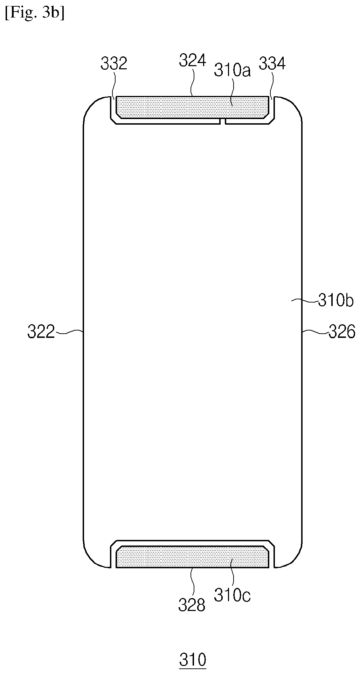

FIG. 3a is a diagram of an electronic device, according to an embodiment. FIG. 3b is a diagram of a second plate, according to an embodiment.

Referring to FIGs. 3a and 3b, an electronic device 300 may include a housing. The housing may include a first plate, a second plate 310 facing away from the first plate, and a side member 320 surrounding a space between the first plate and the second plate 310.

The second plate 310 of the electronic device 300 may include a first slot 332 and a second slot 334. The first slot 332 and the second slot 334 may be filled with a non-conductive material. The electronic device 300 may include a conductive material interposed between one end 312 of the first slot 332 and one end 314 of the second slot 334. The area other than the first slot 332 and the second slot 334 of the second plate 310 may be formed of a conductive material.

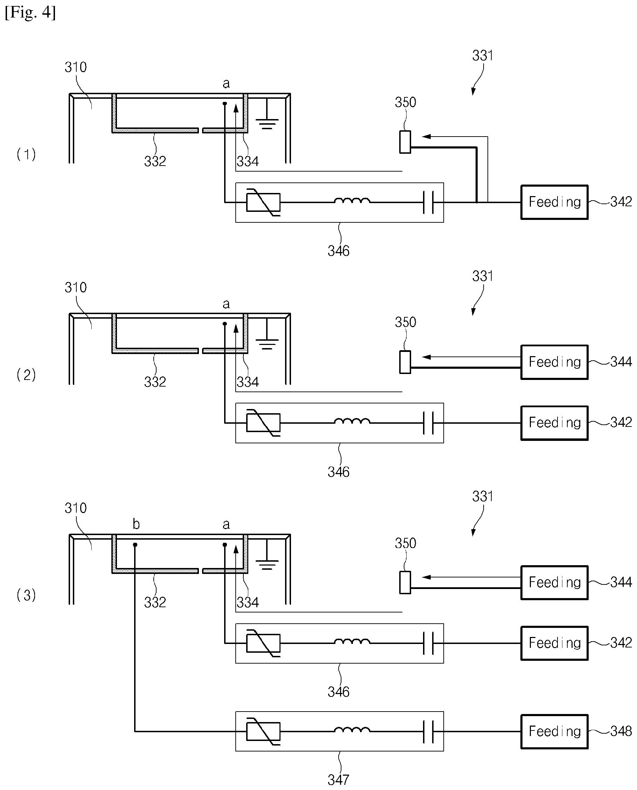

The electronic device 300 may include a circuit board 340 which is located inside the housing and in which a wireless communication circuit 331 (FIG. 4) is disposed. Referring to FIG. 3a, the circuit board 340 disposed inside the second plate 310 is separately illustrated under the second plate 110, and the circuit board 340 may be disposed inside the second plate 310.

The circuit board 340 may include the conductive pattern 350 formed on the circuit board 340 along the first slot 332 or the second slot 334 of the second plate 310. The conductive pattern 350 may be formed in the area of the circuit board 340 facing the first slot 332 or the second slot 334 so as to be the same as or similar to a portion of the shape of the first slot 332 or the second slot 334.

The first slot 332 and the second slot 334 may have various shapes. The conductive pattern 350 inside the housing may have a shape corresponding to the first slot 332 and/or the second slot 334.

The first slot 332 and the second slot 334 may have a U-shape. The first point of the first slot 332 and the second point of the second slot 334 may be formed to contact the edge of the second plate 310.

Referring to FIG. 3a, the conductive pattern 350 formed along the second slot 334 in a U-shape is illustrated. The conductive pattern 350 may be formed in a bent shape similar to a portion of the shape of the second slot 334.

The wireless communication circuit 331 of the electronic device 300 may be configured to feed a point 'b' of a second plate adjacent to the first slot 332 for receiving a signal of a first frequency band through an electrical path formed by the first slot 332 of the second plate 310. One portion of a first conductive layer 310a, one portion of a second conductive layer 310b, and one portion of the first slot 332 may be fed through the 'b' point, and thus may operate as a first antenna (e.g., long-term evolution (LTE) antenna).

The wireless communication circuit 331 of the electronic device 300 may be configured to feed a point 'a' of the second plate 310 adjacent to the second slot 334. The wireless communication circuit 331 may receive a signal of a second frequency band through an electrical path formed by the second slot 334. One portion of the first conductive layer 310a, one portion of the second conductive layer 310b, and one portion of the second slot 334 may be fed through the 'a' point, and thus may operate as a second antenna 360 (e.g., Wi-Fi antenna of 2.4 GHz).

The wireless communication circuit 331 of the electronic device 300 may be configured to feed the conductive pattern 350. The wireless communication circuit 331 may receive a signal of a third frequency band through the first slot 332 or the second slot 334. The conductive pattern 350 may operate as a third antenna (e.g., Wi-Fi antenna of 5 GHz) having the first conductive layer 310a used as the antenna radiator.

Since the second plate 310 is formed of a conductive material, a radiation space for the conductive pattern 350 positioned inside the electronic device 100 is required. The conductive pattern 350 may be disposed to face the first slot 332 or the second slot 334. The conductive pattern 350 may receive a signal through a partial area of the non-conductive material area filled in the first slot 332 or the second slot 334 and may transmit the signal.

The circuit board 340 of the electronic device 300 may be disposed inside the housing such that the conductive pattern 350 is formed to extend from a first point 352 of the second slot 334 to a second point 354 of the second slot 334 along the second slot 334, while facing the second slot 334.

The circuit board 340 may include a connection part 341 connected to the second plate 310 and a feeding part 343, and the circuit board 340 may include a ground part 342 that connects a ground layer of the circuit board 340 to the second plate 310.

The circuit board 340 may include a non-conductive area (e.g., a fill-cut area) 340a. The circuit board 140 may include the conductive pattern 350 formed in the non-conductive area 340a.

The circuit board 340 may include the feeding part 343 for feeding the 'a' point and the conductive pattern 350 and a feeding part 346 for feeding the 'b' point. The feeding parts 343 and 346 may be electrically connected to the processor of the circuit board 340. The circuit board 340 may include two feeding parts for feeding the 'a' point and the conductive pattern 350, respectively.

The circuit board 340 may include connection members 341 and 344 for directly/ indirectly feeding the 'a' point of the second plate 310 and the 'b' point of the second plate 310. The connection members 341 and 344 may include a C-clip, a screw, a conductive member, or other suitable device.

The circuit board 340 may include a feeding line connected from the feeding part 343 to the connection member 341 and the conductive pattern 350. The feeding line may be disposed across a substrate slot 345 from the feeding part 346. Through feeding to the feeding point by the feeding line, the substrate slot 345 and the second plate 310 may operate as a slot antenna.

The circuit board 340 may include a ground layer connected to a ground point (e.g., a' point) of the second plate 310.

The substrate slot 345 corresponding to a portion of the first slot 332 may be formed on the circuit board 340, and the substrate slot 345 may operate as a slot antenna in conjunction with the first slot 332 of the second plate 310.

The side member 320 of the electronic device 100 may include at least a portion of the first slot 332 and at least a portion of the second slot 334. The first slot 332 and the second slot 334 may be formed in the partial area of the side member 320 and in the partial area of the second plate 310.

The circuit board 340 of the electronic device 300 may include another conductive pattern formed on the circuit board 340 along the third slot. The other conductive pattern may operate as another antenna, which uses the third conductive layer 110c as an antenna radiator.

The remaining area of the side member 320 other than one portion of the first slot 332, one portion of the second slot 334, and one portion of a third slot that are formed in the side member 320 may be formed of a conductive material. The electronic device 300 may include a five-sided metal housing in which the second plate 310 and the side member 320 are integrally formed or in which the second plate 310 and the side member 320 are formed to be removable.

The side member 320 may include the first side 322, the second side 324, the third side 325, and the fourth side 328. The first side 322 may extend in a first direction and may have a first length. The second side 324 may extend in a second direction perpendicular to the first direction and may have a second length shorter than the first length. The third side 326 may extend parallel to the first side 322 and may have the first length. The fourth side 328 may extend parallel to the second side 324 and may have the second length. The first slot 332 may extend from a first point of the second side 324 to a first point of the second plate (e.g., one end 312 of the first slot 332). The second slot 334 may extend from the second point of the second side 324 to one end of the second slot (e.g., one end 314 of the second slot 334) positioned at the second point of the second plate 310. For example, the first slot 332 and the second slot 334 may have a U-shape.

The circuit board 340 may include a conductive pattern formed along the first slot 332 of the second plate 310. The wireless communication circuit 331 may be configured to feed a conductive pattern formed along the first slot 332. The wireless communication circuit 331 may receive a signal of a fourth frequency band through the first slot 332 of the second plate 310.

The circuit board 340 may include a plurality of conductive patterns formed along the first slot 332, the second slot 334, and a third slot. Each of conductive patterns may operate as an antenna by using each slot as a radiation area.

FIG. 4 is a diagram of a wireless communication circuit 331, according to an embodiment.

Referring to (1) of FIG. 4, the electronic device 300 has one feeding part 342 for feeding one point of the second plate 310 adjacent to the second slot 334 and the conductive pattern 350.

Referring to (2) FIG. 4, the electronic device has a first feeding part 342 for feeding the point of the second plate 310 adjacent to the second slot 334 and a second feeding part 344 for feeding the conductive pattern 350. A description about a portion duplicated with FIG. 2 is omitted for clarity.

The electronic device 300 may include a matching circuit 346 positioned on an electrical path connecting the point 'a' of the second plate 310 adjacent to the second slot 334 to a wireless communication circuit 331. The wireless communication circuit 331 may be configured to support global positioning system (GPS) communication of 1.5 GHz frequency and Wi-Fi communication of 2.4 GHz frequency through the second slot 334.

The feeding part 342 may be configured to feed the point 'b' of the second plate 310 adjacent to the first slot 332. The electronic device 300 may receive a signal of a first frequency band through an electrical path formed by the first slot 332. Alternatively, the electronic device 300 may include a matching circuit 347 positioned on an electrical path connecting the point 'b' of the second plate 310 adjacent to the second slot 332 to a wireless communication circuit 331, and a third feeding part 348.

The electronic device 300 may transmit or receive a signal (e.g., LTE signal) of a frequency band between 700 MHz and 2700 MHz through the first slot 332 or may transmit or receive a GPS signal of 1.5 GHz frequency and a Wi-Fi signal of 2.4 GHz frequency band through the second slot 334. The electronic device 300 may transmit or receive a Wi-Fi signal of 5 GHz frequency band through the conductive pattern 350.

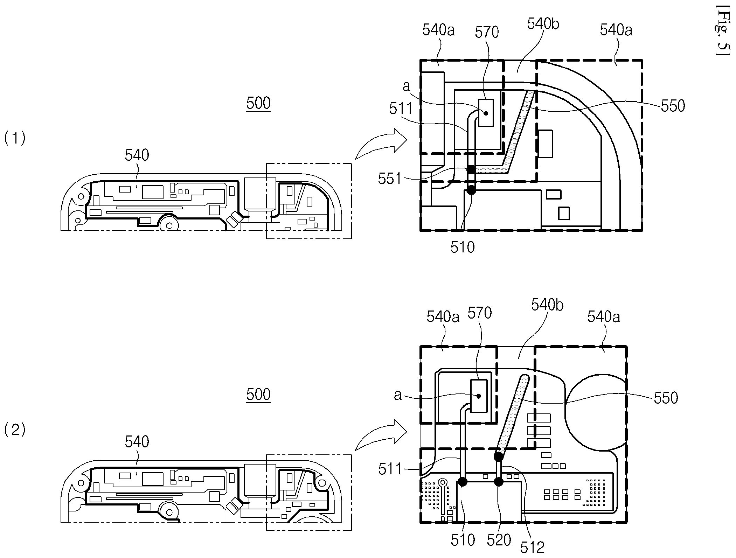

FIG. 5 is a diagram of an electronic device including one or two feeding parts, according to an embodiment.

Referring to (1) of FIG. 5, an electronic device 500 may include one feeding part 510 for feeding a slot and a conductive pattern 550.

A circuit board 540 may include a feeding line 511 that is connected from a wireless communication circuit (e.g., the wireless communication circuit 131 and/or 331) to feeding a point 'a' of a second plate (e.g., the second plate 110 of FIG. 1a and/or the second plate 310 of FIG. 3a) and the conductive pattern 550. The circuit board 540 may include a connection point 551 at which the feeding line 511 meets the conductive pattern 550. The connection point 551 may be disposed at a location corresponding to the slot of the second plate on the circuit board 540.

Referring to (2) of FIG. 5, the electronic device 500 may include the first feeding part 510 for feeding a slot and a second feeding part 520 for feeding the conductive pattern 550. The circuit board 540 may include the first feeding line 511 connected from the first feeding part 510 of the wireless communication circuit to feeding the point 'a' of a second plate, and the circuit board 540 may include a second feeding line 512 connected from the second feeding part 520 of the wireless communication circuit to the conductive pattern 550.

The circuit board 540 may include a connection member physically/electrically connected from the point 'a' of the circuit board 540 to the second plate. For example, a connection member 570 can be provided and can be a C-clip, a screw, a conductive member, or the like.

A partial area 540a of the circuit board 540 may be disposed to face the conductive area of the second plate. Another area 540b of the circuit board 540 may be disposed to face the slot formed in the second plate.

Referring to (2) of FIG. 5, a portion of the conductive pattern 550 may be formed in the other area 540b overlapping with the slot formed in the second plate. The conductive pattern 550 of the circuit board 540 may be disposed inside a housing of the electronic device 500 to face the slot and to extend from a first point of the slot to a second point of the slot.

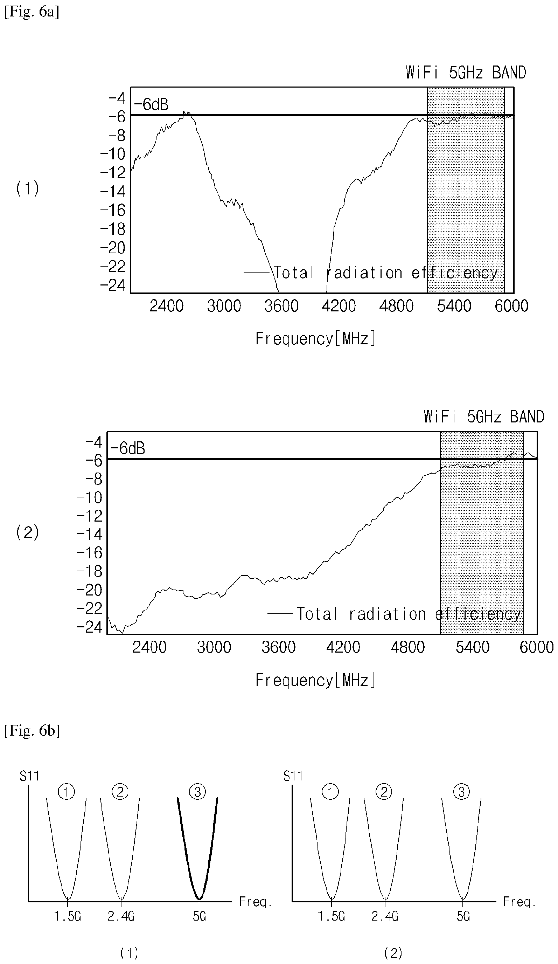

FIGs. 6a and 6b are graphs comparing efficiencies of antennas of an electronic device including one or two feeding parts, according to an embodiment.

Referring to FIG. 6a, with regard to an electronic device (e.g., the electronic device 100 of FIG. 1a) having a conductive pattern (e.g., the conductive pattern 150 of FIG. 1a), graph (1) illustrates the efficiency of a first antenna (e.g., Wi-Fi antenna of 1.4GHz band) and a second antenna (e.g., Wi-Fi antenna of 5 GHz band) when there is one feeding part, and graph (2) illustrates the efficiency of the second antenna (e.g., Wi-Fi antenna of 5 GHz band) when there are two feeding parts.

Referring to graph (1) of FIG. 6a, the efficiency of a signal of about 2.4 GHz band of the first antenna and a signal of about 5 GHz band of the second antenna is relatively high. By using only one feeding part, a wireless communication circuit (e.g., the wireless communication circuit of FIG. 1a and the wireless communication circuit of FIG. 3a) may transmit or receive the signal of 2.4 GHz band of the first antenna and the signal of 5 GHz band of the second antenna, through a slot of the electronic device. For example, the wireless communication circuit may support Wi-Fi communication of a band between 2.4 GHz and 5 GHz.

Referring to graph (2) of FIG. 6a, the efficiency of a signal of about 5 GHz band of the second antenna is relatively high, and even a bit higher than the efficiency of graph (1). The wireless communication circuit may transmit or receive a signal of 5 GHz band of the second antenna, by using a conductive pattern. For example, the wireless communication circuit may support Wi-Fi communication of 5 GHz band.

Referring to graph (1) and graph (2) of FIG. 6a, the efficiency of the signal of 5 GHz band of the second antenna is relatively high in graph (1), compared with graph (2). When there two feeding parts used, the efficiency of the antenna may increase due to the signal loss by a diplexer being reduced.

Referring to FIG. 6b, a graph indicating a reflection loss of an antenna using a slot and a conductive pattern is illustrated. Graph (1) of FIG. 6b represents one feeding part being used, and graph (2) of FIG. 6b represents two feeding parts being used.

Referring to graph (1) and graph (2) of FIG. 6b, the antenna of an electronic device (e.g., the electronic device 100 of FIG. 1a or the electronic device 300 of FIG. 3a) resonates at about 1.5 GHz, 2.4 GHz, and 5 GHz.

The electronic device may support GPS communication of 1.5 GHz band and Wi-Fi communication of 2.4 GHz band by using the slot and may support Wi-Fi communication of 5 GHz band by using a conductive pattern of a circuit board.

When a slot and the feeding part of a circuit board are implemented both integrally and/or separately, the electronic device may support GPS communication and Wi-Fi communication.

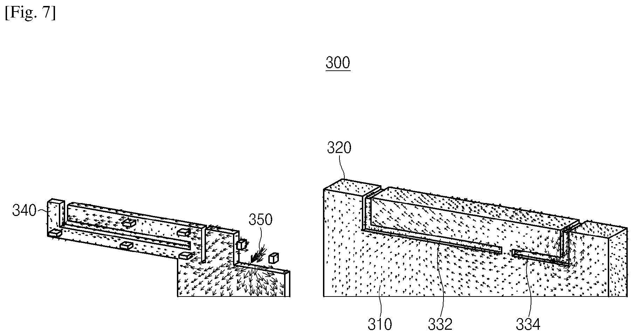

FIG. 7 is a diagram of a distribution of current when an electronic device performs communication through a conductive pattern, according to an embodiment. The conductive pattern 350 may support Wi-Fi communication of 5 GHz band. The intensity of the current is proportional to the number of arrows and the length of an arrow.

Referring to FIG. 7, the current is concentrated in an area where the conductive pattern 350 is located, and in the circuit board 340 of the electronic device 300. The current is concentrated in the slot 334 formed in the second plate 310 and the side member 320 of the electronic device 300.

A Wi-Fi signal of 5 GHz that is transmitted and/or received through the conductive pattern 350 disposed inside the electronic device 300 may be transmitted from electronic device 300 through the slot area of the electronic device 300 or may be received at the electronic device 300.

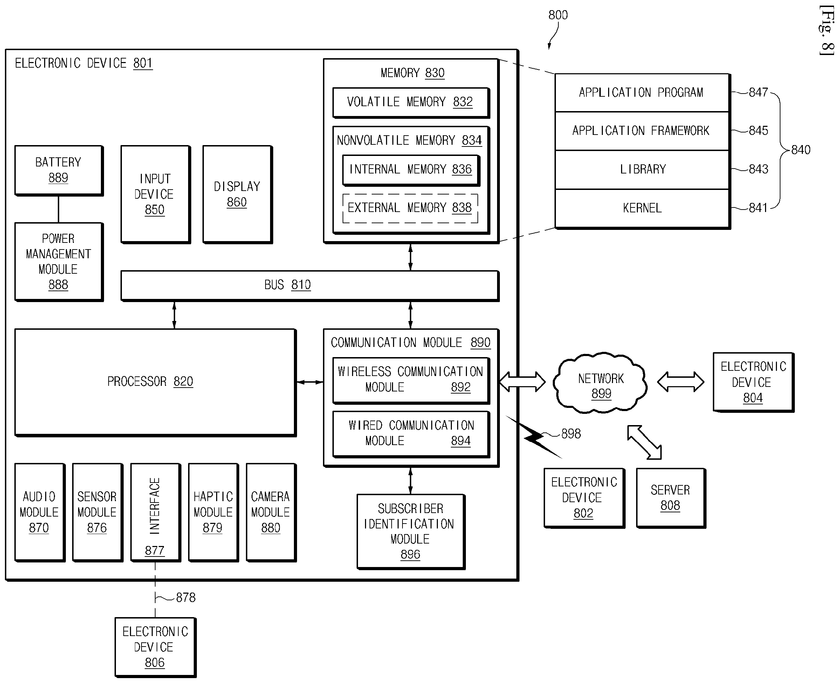

FIG. 8 illustrates an electronic device 801 in a network environment 800, according to an embodiment. The electronic device 801 may be included in one or more types of the devices described above.

Referring to FIG. 8, under the network environment 800, the electronic device 801 (which can include all or some of the components described above with respect to the electronic device 100 of FIG. 1 and/or the electronic device 300 of FIG. 3a) may communicate with an electronic device 802 through local wireless communication interface 898 or may communication with an electronic device 804 or a server 808 through a network 899. The electronic device 801 may communicate with the electronic device 804 through a server 808.

The electronic device 801 may include a bus 810, a processor 820, a memory 830, an input device 850 (e.g., a micro-phone or a mouse), a display device 860, an audio module 870, a sensor module 876, an interface 877, a haptic module 879, a camera module 880, a power management module 888, a battery 889, a communication module 890, and a subscriber identification module (SIM) 896. The electronic device 801 may not include at least one (e.g., the display device 860 or the camera module 880) of the above-described elements or may further include other element(s).

The bus 810 may interconnect the above-described elements 820 to 890 and may include a circuit for conveying signals (e.g., a control message or data) between the above-described elements.

The processor 820 may include one or more of a central processing unit (CPU), an application processor (AP), a graphic processing unit (GPU), an image signal processor (ISP) of a camera or a communication processor (CP). The processor 820 may be implemented with a system on chip (SoC) or a system in package (SiP). The processor 820 may drive an operating system (OS) or an application to control at least one of another element (e.g., hardware or software element) connected to the processor 820 and may process and compute various data. The processor 820 may load a command or data, which is received from at least one of other elements (e.g., the communication module 890), into a volatile memory 832 to process the command or data and may store the result data into a nonvolatile memory 834.

The memory 830 may include the volatile memory 832 or the nonvolatile memory 834. The volatile memory 832 may include a random access memory (RAM) (e.g., a dynamic RAM (DRAM), a static RAM (SRAM), or a synchronous DRAM (SDRAM)). The nonvolatile memory 834 may include a programmable read-only memory (PROM), an one time PROM (OTPROM), an erasable PROM (EPROM), an electrically EPROM (EEPROM), a mask ROM, a flash ROM, a flash memory, a hard disk drive (HDD), or a solid-state drive (SSD). In addition, the nonvolatile memory 834 may be configured in the form of an internal memory 836 or the form of an external memory 838 which is available through connection only if necessary, according to the connection with the electronic device 801. The external memory 838 may further include a flash drive such as compact flash (CF), secure digital (SD), micro secure digital (Micro-SD), mini secure digital (Mini-SD), extreme digital (xD), a multimedia card (MMC), or a memory stick. The external memory 838 may be operatively or physically connected with the electronic device 801 in a wired manner (e.g., a cable or a universal serial bus (USB)) or a wireless (e.g., Bluetooth (BT)) manner.

The memory 830 may store at least one different software element, such as a command or data associated with the program 840, of the electronic device 801. The program 840 may include a kernel 841, a library 843, an application framework 845 or an application program (application) 847.

The input device 850 may include a microphone, a mouse, or a keyboard. The keyboard may include a keyboard physically connected to the electronic device 801 or a virtual keyboard displayed through the display 860.

The display 860 may include a display, a hologram device or a projector, and a control circuit to control a relevant device. The display may include a liquid crystal display (LCD), a light emitting diode (LED) display, an organic LED (OLED) display, a microelectromechanical systems (MEMS) display, or an electronic paper display. The display may be flexible, transparent, or wearable. The display may include a touch circuitry, which is able to detect a user's input such as a gesture input, a proximity input, or a hovering input or a pressure sensor (a force sensor) which is able to measure the intensity of the pressure by the touch. The touch circuit or the pressure sensor may be implemented integrally with the display or may be implemented with at least one sensor separately from the display. The hologram device may show a stereoscopic image in a space using interference of light. The projector may project light onto a screen to display an image. The screen may be located inside or outside the electronic device 801.

The audio module 870 may convert from a sound into an electrical signal or from an electrical signal into the sound. The audio module 870 may acquire sound through the input device 850 (e.g., a microphone) or may output sound through an output device (e.g., a speaker or a receiver) included in the electronic device 801, the electronic device 802 (e.g., a wireless speaker or a wireless headphone) or the electronic device 806 (e.g., a wired speaker or a wired headphone) connected with the electronic device 801

The sensor module 876 may measure or detect an internal operating state (e.g., power or temperature) of the electronic device 801 or an external environment state (e.g., an altitude, a humidity, or brightness) to generate an electrical signal or a data value corresponding to the information of the measured state or the detected state. The sensor module 876 may include at least one of a gesture sensor, a gyro sensor, a barometric pressure sensor, a magnetic sensor, an acceleration sensor, a grip sensor, a proximity sensor, a color sensor (e.g., a red, green, blue (RGB) sensor), an infrared sensor, a biometric sensor (e.g., an iris sensor, a fingerprint senor, a heartbeat rate monitoring (HRM) sensor, an e-nose sensor, an electromyography (EMG) sensor, an electroencephalogram (EEG) sensor, an electrocardiogram (ECG) sensor), a temperature sensor, a humidity sensor, an illuminance sensor, or an ultra violet (UV) sensor. The sensor module 876 may further include a control circuit for controlling at least one or more sensors included therein. The sensor module 876 may be controlled by using the processor 820 or a processor (e.g., a sensor hub) separate from the processor 820. When the separate processor (e.g., a sensor hub) is used, while the processor 820 is in a sleep state, the separate processor may operate without awakening the processor 820 to control at least a portion of the operation or the state of the sensor module 876.

The interface 877 may include a high definition multimedia interface (HDMI), a USB, an optical interface, a recommended standard 232 (RS-232), a D-subminiature (D-sub), a mobile high-definition link (MHL) interface, a SD card/MMC(multi-media card) interface, or an audio interface. A connector 878 may physically connect the electronic device 801 and the electronic device 806. The connector 878 may include a USB connector, an SD card/MMC connector, or an audio connector (e.g., a headphone connector).

The haptic module 879 may convert an electrical signal into mechanical stimulation (e.g., vibration or motion) or into electrical stimulation. The haptic module 879 may apply tactile or kinesthetic stimulation to a user. The haptic module 879 may include, for example, a motor, a piezoelectric element, or an electric stimulator.

The camera module 880 may capture a still image and a moving picture. The camera module 880 may include at least one lens (e.g., a wide-angle lens and a telephoto lens, or a front lens and a rear lens), an image sensor, an image signal processor, or a flash (e.g., a light emitting diode or a xenon lamp).

The power management module 888, which is to manage the power of the electronic device 801, may constitute at least a portion of a power management integrated circuit (PMIC).

The battery 889 may include a primary cell, a secondary cell, or other type of cell and may be recharged by an external power source to supply power to least one element of the electronic device 801.

The communication module 890 may establish a communication channel between the electronic device 801 and the first external electronic device 802, the second external electronic device 804, or the server 808. The communication module 890 may support wired communication or wireless communication through the established communication channel. The communication module 890 may include a wireless communication module 892 or a wired communication module 894. The communication module 890 may communicate with the external device through a first network 898 (e.g. a wireless local area network such as BT or Infrared Data Association (IrDA)) or a second network 899 (e.g., a wireless wide area network such as a cellular network) through a relevant module among the wireless communication module 892 or the wired communication module 894.

The wireless communication module 892 may support cellular communication, local wireless communication, global navigation satellite system (GNSS) communication. The cellular communication may include LTE, LTE Advance (LTE-A), code division multiple access (CMA), wideband CDMA (WCDMA), universal mobile telecommunications system (UMTS), wireless broadband (WiBro), or global system for mobile communications (GSM). The local wireless communication may include Wi-Fi, Wi-Fi direct, light fidelity (Li-Fi), BT, BT low energy (BLE), Zigbee, near field communication (NFC), magnetic secure transmission (MST), radio frequency (RF), or a body area network (BAN). The GNSS may include at least one of a GPS, a global navigation satellite system (Glonass), Beidou Navigation Satellite System (Beidou), the European global satellite-based navigation system (Galileo), or the like. In the disclosure, GPS and GNSS may be interchangeably used.

When the wireless communication module 892 supports cellar communication, the wireless communication module 892 may identify or authenticate the electronic device 801 within a communication network using the SIM 896. The wireless communication module 892 may include a CP separate from the processor 820 (e.g., an AP). The communication processor may perform at least a portion of functions associated with at least one of elements 810 to 896 of the electronic device 801 in substitute for the processor 820 when the processor 820 is in an inactive (sleep) state, and together with the processor 820 when the processor 820 is in an active state. The wireless communication module 892 may include a plurality of communication modules, each supporting only a relevant communication scheme among cellular communication, local wireless communication, or a GNSS communication.

The wired communication module 894 may include a local area network (LAN) service, a power line communication, or a plain old telephone service (POTS).

The first network 898 may employ Wi-Fi direct or BT for transmitting or receiving commands or data through wireless direct connection between the electronic device 801 and the first external electronic device 802. The second network 899 may include a telecommunication network (e.g., a computer network such as a LAN or a WAN, the Internet or a telephone network) for transmitting or receiving commands or data between the electronic device 801 and the second electronic device 804.

The commands or the data may be transmitted or received between the electronic device 801 and the second external electronic device 804 through the server 808 connected with the second network 899. Each of the first and second external electronic devices 802 and 804 may be a device of which the type is different from or the same as that of the electronic device 801. All or a part of operations that the electronic device 801 will perform may be executed by the electronic devices 802 and 804 or the server 808. When the electronic device 801 executes any function or service automatically or in response to a request, the electronic device 801 may not perform the function or the service internally, but may alternatively or additionally transmit requests for at least a part of a function associated with the electronic device 801 to the electronic device 802 or 804 or the server 808. The electronic device 802 or 804 or the server 808 may execute the requested function or additional function and may transmit the execution result to the electronic device 801. The electronic device 801 may provide the requested function or service using the received result or may additionally process the received result to provide the requested function or service. To this end, for example, cloud computing, distributed computing, or client-server computing may be used.

At least a part of an apparatus (e.g., modules or functions thereof) or a method (e.g., operations) may be implemented by instructions stored in a non-transitory computer-readable storage media (e.g., the memory 830) in the form of a program module. The instruction, when executed by a processor (e.g., a processor 820), may cause the processor to perform a function corresponding to the instruction. The non-transitory computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), an embedded memory, and the like. The one or more instructions may contain a code made by a compiler or a code executable by an interpreter.

Each element (e.g., a module or a program module) may be composed of single entity or a plurality of entities, a part of the above-described sub-elements may be omitted or may further include other sub-elements. Alternatively or additionally, after being integrated in one entity, some elements (e.g., a module or a program module) may identically or similarly perform the function executed by each corresponding element before integration. Operations executed by modules, program modules, or other elements may be executed by a successive method, a parallel method, a repeated method, or a heuristic method, or at least one part of operations may be executed in different sequences or omitted. Alternatively, other operations may be added.

While the disclosure has been shown and described with reference to certain embodiments thereof, it will be understood by those skilled in the art that various changes in form and details may be made therein without departing from the scope of the disclosure. Therefore, the scope of the disclosure should not be defined as being limited to the embodiments, but should be defined by the appended claims.

## Claims

1. An electronic device (100) comprising:
a housing (101) including a first plate, a second plate (110) facing the first plate, 5 and a side member (120) surrounding a space between the first plate and the second plate (110); and
a circuit board (140) including a wireless communication circuit (131),
wherein the second plate (110) includes a slot (130) filled with a non-conductive material, wherein an area other than the slot (130) is formed of a conductive material 10 (110a, 110b),
wherein the circuit board (140) includes a conductive pattern (150) formed along a path following the slot (130) of the second plate (110) and formed on the circuit board (140), and
wherein the wireless communication circuit (131) is configured to:
feed one point ('a') adjacent to the slot (130) to receive a signal of a first frequency 15 band through an electrical path formed by the slot (130); and
feed the conductive pattern (150) to receive a signal of a second frequency band through the slot (130).

2. The electronic device (100) of claim 1, wherein the wireless communication circuit 20 (131) includes:
a feeding part (142) configured to feed the one point ('a') adjacent to the slot (130) and the conductive pattern (150); and
a diplexer configured to divide signals received through the slot (130) and the conductive pattern (150) into the signal of the first frequency band and the signal of the 25 second frequency band.

3. The electronic device (100) of claim 1, wherein the wireless communication circuit (131) includes:
a first feeding part (142) configured to feed the one point ('a') adjacent to the slot 30 (130); and
a second feeding part (143) configured to feed the conductive pattern (150).

4. The electronic device (100) of claim 1, wherein the side member (120) includes at least part of the slot (130), and
35 wherein an area of the side member (120) other than the at least part of the slot (130) is formed of a conductive material.

5. The electronic device (100) of claim 1, wherein the side (120) member includes a first side surface (122) extending in a first direction and having a first length, a second side surface (124) extending in a second direction perpendicular to the first direction and having a second length shorter than the first length, a third side surface (126) extending in parallel 5 to the first side surface (122) and having the first length, and a fourth side surface (128) extending in parallel to the second side surface (124) and having the second length, and wherein the slot (130) extends from a first point (124a) of the second side surface (124) to a second point (124b) of the second side surface (124) along the second plate (110). 10

6. The electronic device (100) of claim 1, wherein the wireless communication circuit (131) is configured to provide a signal with a frequency of 5 GHz to a portion of the conductive pattern (150). 15

7. The electronic device (100) of claim 1, wherein the slot (130) includes a first portion (130a) extending in a first direction, a second portion (130b) extending in a second direction substantially perpendicular to the first direction, and a third portion (130c) extending in the first direction, wherein a first end (130b-1) of the second portion (130b) of 20 the slot (130) is connected to the first portion (130a) of the slot (130) and a second end (130b-2) of the second portion (130b) of the slot (130) is connected to the third portion (130c) of the slot (130).

8. The electronic device (100) of claim 7, wherein the slot (130) forms a U shape. 25

9. The electronic device (100) of claim 7, wherein the conductive pattern (150) at least partially overlaps one of the first (130a) and third (130c) portion of the slot (130).

10. The electronic device (100) of claim 1, wherein the wireless communication circuit 30 (131) is configured to support wireless-fidelity, Wi-Fi, communication in a frequency range between 2.4 GHz and 5 GHz, and wherein the wireless communication circuit (131) further includes:
a diplexer configured to divide signals received through the slot (130) and the conductive pattern (150) into a signal of 2.4 GHz frequency and a signal of 5 GHz 35 frequency.

11. The electronic device (100) of claim 1, wherein the wireless communication circuit (131) is configured to:
support Wi-Fi communication of 2.4 GHz frequency using the slot (130); and
support Wi-Fi communication of 5 GHz frequency using the conductive pattern 5 (150), and
wherein the signal of 5 GHz frequency is one of transmitted from the electronic device (100) and received at the electronic device (100), through the slot (130).

12. The electronic device (100) of claim 1, further comprising:
a matching circuit (146) positioned on an electrical path connecting the one point ('a') of the conductive material of the second plate (110) adjacent to the slot (130) to the wireless communication circuit (131),
wherein the wireless communication circuit (131) is configured to support Wi-Fi communication of 2.4 GHz frequency and GPS communication of 1.5 GHz frequency using 15 the slot (130).

## Patentansprüche

1. Elektronische Vorrichtung (100), umfassend:
ein Gehäuse (101), das eine erste Platte, eine zweite Platte (110), die der ersten Platte zugewandt ist, und ein Seitenelement (120) beinhaltet, das einen Raum zwischen der ersten Platte und der zweiten Platte (110) umgibt; und
eine Leiterplatte (140), die eine drahtlose Kommunikationsschaltung (131) beinhaltet,
wobei die zweite Platte (110) einen Schlitz (130) beinhaltet, der mit einem nichtleitenden Material gefüllt ist, wobei ein anderer Bereich als der Schlitz (130) aus einem leitenden Material (110a, 110b) gebildet ist,
wobei die Leiterplatte (140) ein leitendes Muster (150) beinhaltet, das entlang eines Pfades gebildet ist, der dem Schlitz (130) der zweiten Platte (110) folgt und auf der Leiterplatte (140) gebildet ist, und
wobei die drahtlose Kommunikationsschaltung (131) für Folgendes konfiguriert ist:
Speisen eines Punktes ('a') benachbart zu dem Schlitz (130), um ein Signal eines ersten Frequenzbandes durch einen elektrischen Pfad zu empfangen, der durch den Schlitz (130) gebildet ist; und
Speisen des leitenden Musters (150), um ein Signal eines zweiten Frequenzbandes durch den Schlitz (130) zu empfangen.

2. Elektronische Vorrichtung (100) nach Anspruch 1, wobei die drahtlose Kommunikationsschaltung (131) Folgendes beinhaltet:
einen Speiseteil (142), der konfiguriert ist, um den einen Punkt ('a') benachbart zu dem Schlitz (130) und dem leitenden Muster (150) zu speisen; und
einen Diplexer, der konfiguriert ist, um Signale, die durch den Schlitz (130) und das leitende Muster (150) empfangen werden, in das Signal des ersten Frequenzbandes und das Signal des zweiten Frequenzbandes zu teilen.

3. Elektronische Vorrichtung (100) nach Anspruch 1, wobei die drahtlose Kommunikationsschaltung (131) Folgendes beinhaltet:
einen ersten Speiseteil (142), der konfiguriert ist, um den einen Punkt ('a') benachbart zu dem Schlitz (130) zu speisen; und
einen zweiten Speiseteil (143), der konfiguriert ist, um das leitende Muster (150) zu speisen.

4. Elektronische Vorrichtung (100) nach Anspruch 1, wobei das Seitenelement (120) zumindest Teil des Schlitzes (130) beinhaltet, und
wobei ein anderer Bereich des Seitenelements (120) als der zumindest eine Teil des Schlitzes (130) aus einem leitenden Material gebildet ist.

5. Elektronische Vorrichtung (100) nach Anspruch 1, wobei das Seitenelement (120) eine erste Seitenfläche (122), die sich in einer ersten Richtung erstreckt und eine erste Länge aufweist, eine zweite Seitenfläche (124), die sich in einer zweiten Richtung senkrecht zu der ersten Richtung erstreckt und eine zweite Länge aufweist, die kürzer als die erste Länge ist, eine dritte Seitenfläche (126), die sich parallel zu der ersten Seitenfläche (122) erstreckt und die erste Länge aufweist, und eine vierte Seitenfläche (128) beinhaltet, die sich parallel zu der zweiten Seitenfläche (124) erstreckt und die zweite Länge aufweist, und
wobei sich der Schlitz (130) von einem ersten Punkt (124a) der zweiten Seitenfläche (124) zu einem zweiten Punkt (124b) der zweiten Seitenfläche (124) entlang der zweiten Platte (110) erstreckt.

6. Elektronische Vorrichtung (100) nach Anspruch 1, wobei die drahtlose Kommunikationsschaltung (131) für Folgendes konfiguriert ist:
Bereitstellen eines Signals mit einer Frequenz von 5 GHz an einen Abschnitt des leitenden Musters (150).

7. Elektronische Vorrichtung (100) nach Anspruch 1, wobei der Schlitz (130) einen ersten Abschnitt (130a), der sich in einer ersten Richtung erstreckt, einen zweiten Abschnitt (130b), der sich in einer zweiten Richtung erstreckt, die im Wesentlichen senkrecht zu der ersten Richtung ist, und einen dritten Abschnitt (130c) beinhaltet, der sich in der ersten Richtung erstreckt, wobei ein erstes Ende (130b-1) des zweiten Abschnittes (130b) des Schlitzes (130) mit dem ersten Abschnitt (130a) des Schlitzes (130) verbunden ist und ein zweites Ende (130b-2) des zweiten Abschnittes (130b) des Schlitzes (130) mit dem dritten Abschnitt (130c) des Schlitzes (130) verbunden ist.

8. Elektronische Vorrichtung (100) nach Anspruch 7, wobei der Schlitz (130) eine U-Form bildet.

9. Elektronische Vorrichtung (100) nach Anspruch 7, wobei das leitende Muster (150) zumindest teilweise einen von dem ersten (130a) und dem dritten (130c) Abschnitt des Schlitzes (130) überlappt.

10. Elektronische Vorrichtung (100) nach Anspruch 1, wobei die drahtlose Kommunikationsschaltung (131) konfiguriert ist, um Wireless-Fidelity-, Wi-Fi-Kommunikation in einem Frequenzbereich zwischen 2,4 GHz und 5 GHz zu unterstützen, und wobei die drahtlose Kommunikationsschaltung (131) ferner Folgendes beinhaltet:
einen Diplexer, der konfiguriert ist, um Signale, die durch den Schlitz (130) und das leitende Muster (150) empfangen werden, in ein Signal mit 2,4 GHz Frequenz und ein Signal mit 5 GHz Frequenz zu teilen.

11. Elektronische Vorrichtung (100) nach Anspruch 1, wobei die drahtlose Kommunikationsschaltung (131) für Folgendes konfiguriert ist:
Unterstützen von Wi-Fi-Kommunikation mit 2,4 GHz-Frequenz unter Verwendung des Schlitzes (130); und
Unterstützen von Wi-Fi-Kommunikation mit 5 GHz Frequenz unter Verwendung des leitenden Musters (150), und
wobei das Signal mit 5 GHz Frequenz eines von übertragen von der elektronischen Vorrichtung (100) und empfangen an der elektronischen Vorrichtung (100) durch den Schlitz (130) ist.

12. Elektronische Vorrichtung (100) nach Anspruch 1, ferner umfassend:
eine Anpassungsschaltung (146), die auf einem elektrischen Pfad positioniert ist, der den einen Punkt ('a') des leitenden Materials der zweiten Platte (110) benachbart zu dem Schlitz (130) mit der drahtlosen Kommunikationsschaltung (131) verbindet,
wobei die drahtlose Kommunikationsschaltung (131) konfiguriert ist, um Wi-Fi-Kommunikation mit 2,4 GHz Frequenz und GPS-Kommunikation mit 1,5-GHz Frequenz unter Verwendung des Schlitzes (130) zu unterstützen.

## Revendications

1. Dispositif électronique (100) comprenant :
un boîtier (101) comprenant une première plaque, une deuxième plaque (110) faisant face à la première plaque, et un élément latéral (120) entourant un espace entre la première plaque et la deuxième plaque (110) ; et
une carte de circuit (140) comprenant un circuit de communication sans fil (131),
la deuxième plaque (110) comprenant une fente (130) remplie d'un matériau non conducteur, une zone autre que la fente (130) étant composée d'un matériau conducteur (110a, 110b),
la carte de circuit (140) comprenant un motif conducteur (150) formé le long d'un chemin suivant la fente (130) de la deuxième plaque (110) et formé sur la carte de circuit (140), et
le circuit de communication sans fil (131) étant configuré pour :
alimenter un point (« a ») adjacent à la fente (130) pour recevoir un signal d'une première bande de fréquences à travers un chemin électrique formé par la fente (130) ; et
alimenter le motif conducteur (150) pour recevoir un signal d'une deuxième bande de fréquences à travers la fente (130).

2. Dispositif électronique (100) selon la revendication 1, le circuit de communication sans fil (131) comprenant :
une partie d'alimentation (142) configurée pour alimenter le point (« a ») adjacent à la fente (130) et au motif conducteur (150) ; et
un diplexeur configuré pour diviser des signaux reçus à travers la fente (130) et le motif conducteur (150) en le signal de la première bande de fréquences et le signal de la deuxième bande de fréquences.

3. Dispositif électronique (100) selon la revendication 1, le circuit de communication sans fil (131) comprenant :
une première partie d'alimentation (142) configurée pour alimenter le point (« a ») adjacent à la fente (130) ; et
une deuxième partie d'alimentation (143) configurée pour alimenter le motif conducteur (150).

4. Dispositif électronique (100) selon la revendication 1, l'élément latéral (120) comprenant au moins une partie de la fente (130), et
une zone de l'élément latéral (120) autre que l'au moins une partie de la fente (130) étant composée d'un matériau conducteur.

5. Dispositif électronique (100) selon la revendication 1, l'élément latéral (120) comprenant une première surface latérale (122) s'étendant dans une première direction et possédant une première longueur, une deuxième surface latérale (124) s'étendant dans une deuxième direction perpendiculaire à la première direction et possédant une deuxième longueur plus courte que la première longueur, une troisième surface latérale (126) s'étendant parallèlement à la première surface latérale (122), et dont la longueur est la première longueur, et une quatrième surface latérale (128) s'étendant parallèlement à la deuxième surface latérale (124), et dont la longueur est la deuxième longueur, et
la fente (130) s'étendant d'un premier point (124a) de la deuxième surface latérale (124) à un deuxième point (124b) de la deuxième surface latérale (124) le long de la deuxième plaque (110).

6. Dispositif électronique (100) selon la revendication 1, le circuit de communication sans fil (131) étant configuré pour
fournir un signal de 5 GHz de fréquence à une partie du motif conducteur (150).

7. Dispositif électronique (100) selon la revendication 1, la fente (130) comprenant une première partie (130a) s'étendant dans une première direction, une deuxième partie (130b) s'étendant dans une deuxième direction substantiellement perpendiculaire à la première direction, et une troisième partie (130c) s'étendant dans la première direction, une première extrémité (130b-1) de la deuxième partie (130b) de la fente (130) étant reliée à la première partie (130a) de la fente (130), et une deuxième extrémité (130b-2) de la deuxième partie (130b) de la fente (130) étant reliée à la troisième partie (130c) de la fente (130).

8. Dispositif électronique (100) selon la revendication 7, la fente (130) étant en forme de U.

9. Dispositif électronique (100) selon la revendication 7, le motif conducteur (150) chevauchant au moins partiellement l'une de la première (130a) et de la troisième (130c) partie de la fente (130).

10. Dispositif électronique (100) selon la revendication 1, le circuit de communication sans fil (131) étant configuré pour prendre en charge des communications de fidélité sans fil, Wi-Fi, dans une plage de fréquences comprise entre 2,4 GHz et 5 GHz, le circuit de communication sans fil (131) comprenant en outre :
un diplexeur configuré pour diviser des signaux reçus à travers la fente (130) et le motif conducteur (150) en un signal de fréquence 2,4 GHz et un signal de fréquence 5 GHz.

11. Dispositif électronique (100) selon la revendication 1, le circuit de communication sans fil (131) étant configuré pour :
prendre en charge des communications Wi-Fi de 2,4 GHz de fréquence à l'aide de la fente (130) ; et
prendre en charge des communications Wi-Fi de 5 GHz de fréquence à l'aide du motif conducteur (150), et
le signal de fréquence 5 GHz étant l'un de ceux qui sont transmis depuis le dispositif électronique (100) et reçus au dispositif électronique (100), à travers la fente (130).

12. Dispositif électronique (100) selon la revendication 1, comprenant en outre :
un circuit d'adaptation (146) positionné sur un chemin électrique reliant le point (« a ») du matériau conducteur de la deuxième plaque (110) adjacente à la fente (130) au circuit de communication sans fil (131),
le circuit de communication sans fil (131) étant configuré pour prendre en charge des communications Wi-Fi de 2,4 GHz de fréquence et des communications GPS de 1,5 GHz de fréquence à l'aide de la fente (130).
